# EUROPÄISCHE PATENTSCHRIFT

(11) **EP 0 717 298 B1**
(45) Veröffentlichungstag und Bekanntmachung des Hinweises auf die Patenterteilung: **23.08.2000**
(21) Anmeldenummer: 95119395.2
(22) Anmeldetag: 08.12.1995
(51) Int. Cl.: G02B 7/02

(54) **Vorrichtung zur Temperaturkompensation**
Temperature compensation device
Dispositif pour compensation de température

(30) Priorität: 16.12.1994 DE 4445087
(43) Veröffentlichungstag der Anmeldung: 19.06.1996
(73) Patentinhaber: Optische Werke G. Rodenstock, 80469 München (DE)
(72) Erfinder: Hanke, Peter, D-82223 Eichenau (DE); Grimminger, Rolf-Dietrich, D-81671 München (DE); Partheymüller, Ulrich, D-83607 Holzkirchen (DE)

(56) Entgegenhaltungen:
- DE-A- 3 714 745
- SU-A- 651 290
- US-A- 3 671 108
- US-A- 4 116 537
- US-A- 5 210 650

## Beschreibung

Die Erfindung betrifft eine Vorrichtung zur Temperaturkompensation eines optischen Systems gemäß Oberbegriff des Patentanspruches 1.

Es sind verschiedene Möglichkeiten bekannt, die relative Lage optischer Elemente in einem optischen System oder z.B. die Lage des Brennpunktes eines abbildenden optischen Systems relativ zu einer Fassung bei Temperaturänderungen konstant zu halten.

Neben der aktiven Temperaturkompensation durch Regelkreise ist auch die passive Temperaturkompensation bekannt: Zur passiven Temperaturkompensation können z.B. Werkstoffe mit einem Wärmeausdehnungskoeffizienten, der kleiner ist als der Wärmeausdehnungskoeffizient des Fassungswerkstoffes, beispielsweise Aluminium, verwendet werden. Derartige Werkstoffe sind z.B. Kunststoffe. Diese haben den Nachteil, Wärme schlecht zu leiten. Zudem zeigen Kunststoffe Setzeffekte, die im Langzeitbetrieb eine mangelnde Reproduzierbarkeit bewirken.

Durch die Druckschrift SU 651 290 ist eine gattungsgemäße Vorrichtung bekannt. Dabei ist allerdings ein mit einer Flüssigkeit gefüllter Behälter vorgesehen. Eine durch Temperaturänderung bedingte Volumenänderung der Flüssigkeit mit bekanntem Wärmeausdehnungskoeffizienten bewirkt eine Verschiebung eines Bolzens 7 und damit einer Wippe.

Durch die DE-OS 37 14 745 ist es bekannt, relative axiale Abweichungen optischer Bauelemente bei veränderten Temperatureinflüssen zu verhindern, indem die optischen Bauelemente in eine Hohlzylinderkombination an einer Strebenkonstruktion eingefügt sind, deren Materialkonstanten so gewählt sind, daß auftretende Längenausdehnungen gegensinnig kompensiert werden. Von Nachteil ist dabei, daß die Abstimmung dieser Temperaturkompensation ausschließlich über die Auswahl geeigneter Werkstoffe erfolgt. Die Verwendung dreier Hohlzylinder verursacht darüberhinaus hohe Kosten.

Der Erfindung liegt die Aufgabe zugrunde, eine kostengünstige Lösung für eine passive Temperaturkompensation für optische Systeme der eingangs genannten Art anzugeben, die eine werkstoffunabhängige Abstimmung ermöglicht, die über einen großen Temperaturbereich funktioniert und eine Optimierung der Kompensation gemäß Temperaturgang ermöglicht. Im Vergleich zu herkömmlichen Systemen soll eine Verbesserung der Reproduzierbarkeit im Langzeitbetrieb erreicht werden.

Diese Aufgabe wird erfindungsgemäß durch die im Patentanspruch 1 angegebenen Merkmale gelöst. Bevorzugte Ausgestaltungen der Erfindung sind in den Unteransprüchen angegeben.

Erfindungsgemäß ist eine Ringwippe, also ein doppelarmiger Hebel vorgesehen, deren Drehpunkt gegenüber der Fassung ortsfest ist. Ein Hebelarm der Wippe ist über ein Verbindungselement mit der Halterung für das optische Element, der andere Hebelarm über ein weiteres Verbindungselement mit der Fassung, in der die Halterung verschiebbar angeordnet ist, verbunden.

Die Kompensationswege können durch Wahl geeigneter Hebelverhältnisse abgestimmt werden. Die Abstimmung ist, da sie nur von den Hebelverhältnissen abhängig ist, werkstoffunabhängig.

Bei der vorgeschlagenen Temperaturkompensation wird für die Verbindungselemente ein Werkstoff gewählt, dessen Wärmeausdehnungskoeffizient möglichst klein, vorzugsweise kleiner als ein Viertel des Wertes des Wärmeausdehnungskoeffizienten des Fassungswerkstoffes ist. Die Wippe und die Verbindungselemente sind vorzugsweise innerhalb der Fassung angeordnet. Somit sind Werkstoffe, die der thermischen Dehnung unterliegen, d.h. Werkstoffe mit einem hohen Wärmeausdehnungskoeffizienten außenliegend. Dies bedeutet für die vorgeschlagene Temperaturkompensation eine kurze Ansprechzeit.

Die vorgeschlagene Vorrichtung zur Temperaturkompensation ist nicht nur sehr kostengünstig herzustellen, sondern ist auch über einen großen Temperaturbereich funktionstüchtig.

Bevorzugt bestehen die beiden Verbindungselemente aus demselben Material. Als Material für die Verbindungselemente eignet sich Invar wegen des niedrigen Wärmeausdehnungskoeffizienten besonders.

In einer weiteren bevorzugten Ausgestaltung ist die vorgeschlagene Kompensationsvorrichtung spiel- und stick-slip-frei aufgebaut. Dazu ist zwischen Fassung und Halterung eine in Richtung der Zylinderachse der Fassung wirkende Feder angeordnet.

Grundsätzlich gibt es verschiedene Möglichkeiten, die Lage des Drehpunktes der Wippe bezüglich des optischen Bauelementes sowie die Anordnung der Verbindungselemente zu wählen.

Für die vorgeschlagene Kompensationsvorrichtung werden jedoch die in den Unteransprüchen 4 und 5 angegebenen Varianten bevorzugt. Diese Varianten sollen anhand eines Beispiels erläutert werden:

Das optische Element ist beispielsweise ein fokussierendes Linsensystem. Es soll eine relative Verschiebung des Fokus des Systems gegenüber einer bestimmten Stelle der Fassung verhindert werden. Die gesamte Fokusverlagerung, die sich ohne Kompensation ergibt, setzt sich zusammen aus der Fokusverlagerung, die sich durch die Wärmeausdehnung der Fassung ergibt, und der Fokusverlagerung, die sich bei einer Änderung der Temperatur des Linsensystems ergibt. Bewirkt eine Temperaturänderung eine negative gesamte Fokusverlagerung, bei der der Fokus auf das Linsensystem zuwandert, so muß das Linsensystem so bewegt werden, daß die Fokusverlagerung kompensiert wird, d.h. die Lage des Fokus sich relativ zur Fassung nicht ändert. Für diesen Fall wird die in Unteranspruch 4 angegebene Variante bevorzugt.

Bewirkt eine Temperaturänderung dagegen eine positive gesamte Fokusverlagerung, d.h. der Fokus bewegt sich vom Linsensystem weg, so kann diese Änderung vorzugsweise durch die in Unteranspruch 5 angegebene Variante kompensiert werden.

Selbstverständlich kann die vorgeschlagene Kompensationsvorrichtung nicht nur bei fokussierenden Linsensystemen angewendet werden.

Weitere bevorzugte Ausführungsformen sind in den Unteransprüchen 6 und 7 angegeben:

Eine Vorrichtung zur Temperaturkompensation ist besonders kostengünstig, wenn die Verbindungselemente gemäß Unteranspruch 6 stabförmig sind und diese sich parallel zur Zylinderachse der Fassung erstrecken.

Die vorgeschlagene Temperaturkompensationvorrichtung wirkt besonders rasch, wenn der Temperaturausgleich zwischen dem Raum innerhalb und dem Raum außerhalb der Fassung möglichst schnell erfolgt. Daher ist es von Vorteil, wenn Fassung und Halterung gemäß Anspruch 7 aus Metall, also aus einem Material mit gutem Wärmeleitvermögen bestehen.

Im folgenden soll anhand schematischer Skizzen ein Ausführungsbeispiel einer erfindungsgemäßen Vorrichtung beschrieben werden:
In den Figuren ist ein fokussierendes optisches Linsensystem dargestellt.

In Fig. 1 sind die möglichen Fokusverlagerungen dargestellt.
Die Figuren 2a, 2b und 2c zeigen das Verhalten eines nur schematisch dargestellten Ausführungsbeispieles einer Kompensationsvorrichtung.

Die Figuren 3a und 3b zeigen ein weiteres Ausführungsbeispiel.

Fig. 4 zeigt einen Querschnitt durch ein Infrarotsystem mit einer Vorrichtung zur Temperaturkompensation.

In den Figuren sind einander entsprechende Teile mit denselben Bezugszeichen versehen.

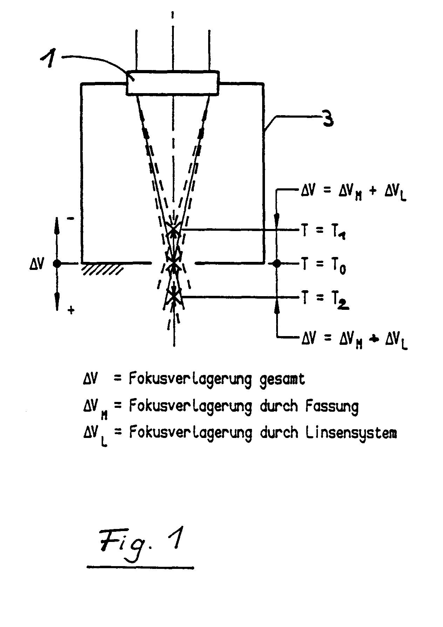

In Fig. 1 ist ein fokussierendes Linsensystem 1 schematisch dargestellt, das sich in einer Fassung 3 ohne Temperaturkompensationsvorrichtung befindet. Ein das Linsensystem durchsetzendes Lichtbündel ist mit durchgezogenen Linien dargestellt. Bei einer bestimmten Temperatur T₀ hat der Fokus eine bestimmte Lage gegenüber der Fassung 3. Diese Ausgangslage wird als 0-Punkt für die gesamte Fokusverlagerung Δ V gewählt. Bei der Temperatur T₀ ist Δ V = 0. Wird die Temperatur T₀ auf eine Temperatur T₁ erhöht, so kann sich die Lage des Fokus gegenüber der Fassung 3 ändern. Die gesamte Fokusverlagerung Δ V setzt sich zusammen aus der Fokusverlagerung Δ V_{M}, die die Fassung aufgrund ihrer Längenänderung bei der angenommenen Temperaturänderung beiträgt, und der Fokusverlagerung Δ V_{L}, die das Linsensystem z.B. aufgrund der Änderung von Krümmungsradien und des Brechungsindex bei der angenommenen Temperaturänderung beiträgt. Im Fall der Temperaturerhöhung auf die Temperatur T₁ kann die gesamte Fokusverlagerung Δ V negativ sein, d.h. der Fokus liegt bei der Temperatur T₁ näher beim Linsensystem als bei der Temperatur T0. Die gesamte Fokusverlagerung Δ V kann aber auch positiv sein, d.h. der Fokus liegt bei der Temperatur T₁ weiter vom Linsensystem weg als bei der Temperatur T₀. Die Lage des Fokus ist in Fig. 1 schematisch eingezeichnet.

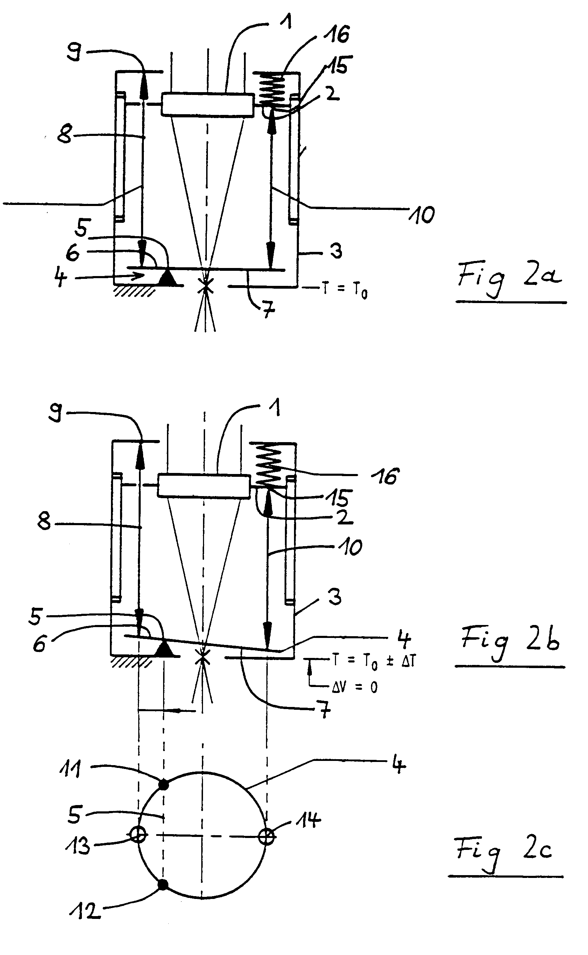

Ein Ausführungsbeispiel einer vorgeschlagenen Vorrichtung zur Kompensation einer negativen gesamten Fokusverlagerung ist in den Figuren 2a, 2b und 2c dargestellt.

Fig. 2a zeigt den Zustand des Systems bei der Temperatur T₀, Fig. 2b den Zustand bei der Temperatur T₁. Fig. 2c zeigt eine schematische Aufsicht auf die Ringwippe.

Das dargestellte optische System besteht aus dem fokussierenden Linsensystem 1, das in einer Halterung 2 angeordnet ist, die ihrerseits gegenüber einer hohlzylindrischen. z.B. aus Aluminium bestehenden Fassung 3 entlang der Zylinderachse verschiebbar angeordnet ist. Eine Wippe 4 ist entlang der Zylinderachse mit Abstand zum Linsensystem 1 angeordnet. Die Wippe 4 ist als Ringwippe (siehe Fig. 2c) ausgebildet. Mittels zweier nicht näher dargestellter Zapfen 11, 12 ist die Wippe 4 in der Fassung 3 gelagert. Die Wippe 4 kippt um eine Kippachse 5. Die Kippachse 5 ist im wesentlichen senkrecht zur Zylinderachse der Fassung 3 angeordnet. Durch die Kippachse 5 wird die Ringwippe in zwei Hebelarme 6,7 geteilt. An beiden Hebelarmen 6,7 sind Verbindungselemente 8,10 zum Beispiel aus Invar an dem mit dem Bezugszeichen 13 und 14 gekennzeichneten Stellen der Wippe befestigt. Das Verbindungselement 8 ist mit seinem anderen Ende an der Fassung befestigt (Bezugszeichen 9). Das Verbindungselement 10 dagegen ist an der Halterung 2 befestigt (Bezugszeichen 15). Um einen spiel- und stick-slip-freien Aufbau der Vorrichtung zu erhalten, ist eine in Richtung der Zylinderachse der Fassung wirkende Feder 16 zwischen Halterung 2 und Fassung 3 gespannt.

In Fig. 2a nimmt der Fokus die mit T₀ gekennzeichnete Position ein. Ändert sich nun die Umgebungstemperatur ( Δ T) so soll der Fokus seine relative Lage zur Fassung 3 nicht ändern, d.h. Δ V = 0.

Der Zustand des optischen Systems bei geänderter Umgebungstemperatur T₀ + Δ T ist in Fig. 2b dargestellt. Bei einer Temperaturerhöhung dehnt sich beispielsweise die Fassung 3 aus. Das Verbindungselement 8 zieht Hebelarm 6 mit, wodurch die Halterung 2 über Hebelarm 7 und Verbindungselement 10 relativ zur Fassung auf die Wippe 4 zubewegt wird. Die Hebelverhältnisse und die Längen der Verbindungselemente sind für einen Fachmann problemlos festzulegen. Sie werden so gewählt, daß die Lage des Fokus gegenüber der Fassung 3 sich trotz Temperaturänderung nicht ändert.

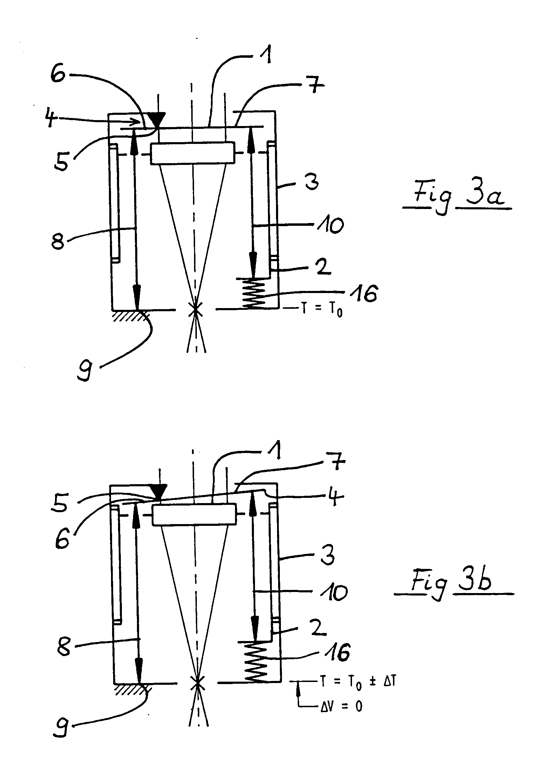

Die Verhältnisse bei einer positiven gesamten Fokusverlagerung sind in den Figuren 3a und 3b dargestellt.

In diesem Fall ist die Wippe 4 im Bereich des Linsensystems 1 angeordnet. Das Verbindungselement 8 ist mit der Fassung an einem Punkt 9 befestigt, während das Verbindungselement 10 mit der Halterung 2 verbunden ist. Dehnt sich Fassung 3 bei einer Temperaturerhöhung aus, so wird der Hebelarm 6 vom Verbindungselement 8 gezogen, wodurch die Halterung 2 über Hebelarm 7 und Verbindungselement 10 relativ zur Fassung auf die Wippe 4 zubewegt wird. Aufgrund dieser Bewegung behält der Fokus, der sich bei Temperaturerhöhung vom Linsensystem entfernt, seine Lage relativ zur Fassung 3 bei.

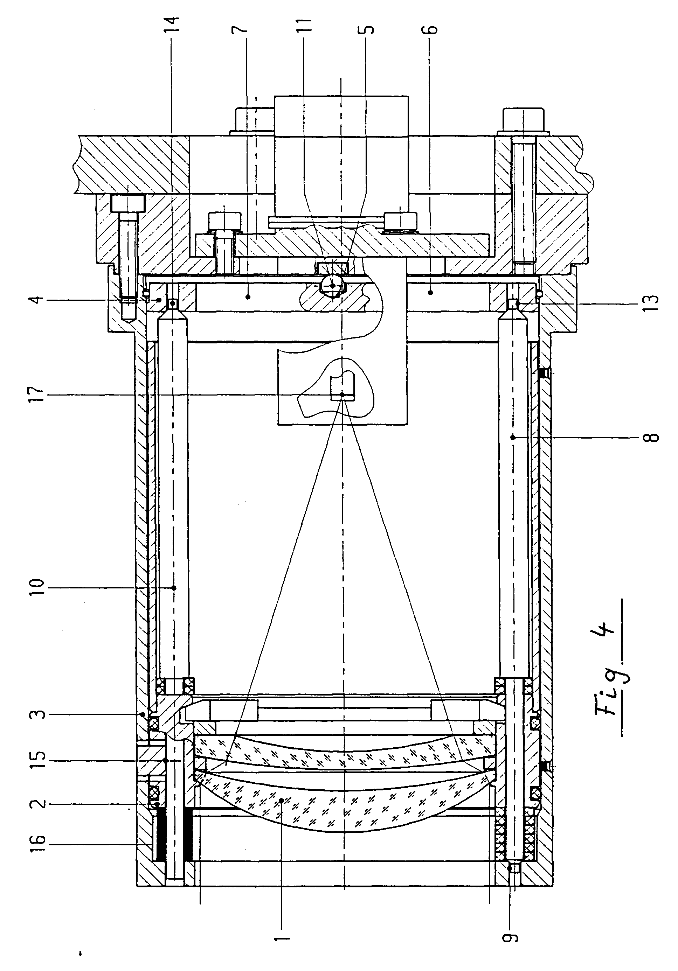

Bei dem in Fig.4 dargestellten Infrarotsystem ist es erforderlich, daß der Fokus des optischen Systems auch bei Temperaturänderungen relativ zu einem Detektor 17 ortsfest bleibt. Dieses Infrarotsystem ist ein Anwendungsbeispiel der Vorrichtung gemäß Figuren 2a - 2c. Der Fixpunkt des Systems liegt im Detektor. Die in Figur 4 und in den Figuren 2a - 2c dargestellten Gegenstände haben, soweit ihre Funktion übereinstimmt, das gleiche Bezugszeichen.

## Patentansprüche

1. Vorrichtung zur Temperaturkompensation eines optischen Systems mit einem optischen Element in einer Halterung (2), die gegenüber einer Fassung (3) entlang der Zylinderachse der Fassung verschiebbar angeordnet ist, wobei
a) zur Kompensation von Längenveränderungen der Fassung wegen Temperaturänderungen an der Fassung (3) eine Wippe (4) angeordnet ist, deren Kippachse sich senkrecht zur Zylinderachse der Fassung (3) erstreckt und gegenüber der Fassung (3) ortsfest ist,
b) ein erstes Verbindungselement (8) einerseits an dem einen Hebelarm (6) der Wippe und andererseits an der Fassung (3) an einer vom Drehpunkt (5) entlang der Zylinderachse entfernten Stelle gehalten ist, wobei das Hebelverhältnis auf den für eine vorgegebene Temperaturänderung erforderlichen Kompensationsweg für das optische Element abgestimmt ist und
c) ein zweites Verbindungselement (10) einerseits an dem anderen Hebelarm (7) der Wippe (4) und andererseits an der Halterung (2) des optischen Elementes (1) gehalten ist, dadurch gekennzeichnet, daß
d) beide Verbindungselemente (8) jeweils aus einem Material mit einem Wärmeausdehnungskoeffizienten α1, bzw α2, der kleiner ist als der der Fassung, bestehen, und daß
e) die Wippe (4) die Form eines Ringes besitzt, der konzentrisch zur Zylinderachse in der Fassung (3) angeordnet und kippbar in der Fassung gelagert ist.

2. Vorrichtung nach Anspruch 1, dadurch gekennzeichnet, daß der Wert des Wärmeausdehnungskoeffizienten α1 des ersten Verbindungselementes (8) und/oder der des Wärmeausdehnungskoeffizienten α2 des zweiten Verbindungselementes (10) kleiner als ein Viertel des Wertes des Wärmeausdehnungskoeffizienten der Fassung (3) ist.

3. Vorrichtung nach einem der Ansprüche 1 oder 2, dadurch gekennzeichnet, daß zur Beseitigung des Spiels der Wippe (4) eine in Richtung parallel zur Zylinderachse der Fassung (3) wirkende Feder (16) zwischen Fassung (3) und Haltering (2) angeordnet ist.

4. Vorrichtung nach einem der Ansprüche 1 bis 3, dadurch gekennzeichnet, daß die Wippe (4) entlang der Zylinderachse der Fassung (3) mit Abstand zum optischen Element (1) angeordnet ist und daß das erste Verbindungselement (8) im Bereich des optischen Elementes (1) an der Fassung (3) und das zweite Verbindungselement (10) im Bereich des optischen Elementes (1) an der Halterung (2) gehalten ist.

5. Vorrichtung nach einem der Ansprüche 1 bis 3, dadurch gekennzeichnet, daß die Wippe (4) im Bereich des optischen Elementes (1) angeordnet ist und das erste Verbindungselement (8) entlang der Zylinderachse der Fassung (3) mit Abstand zum optischen Element (1) an der Fassung (3) und das zweite Verbindungselement (10) entlang der Zylinderachse der Fassung (3) mit Abstand zum optischen Element (1) an der Halterung (2) gehalten ist.

6. Vorrichtung nach einem der Ansprüche 1 bis 5, dadurch gekennzeichnet, daß die Verbindungselemente (8,10) stabförmig sind und sich parallel zur Zylinderachse der Fassung (3) erstrecken.

7. Vorrichtung nach einem der Ansprüche 1 bis 6, dadurch gekennzeichnet, daß Fassung (3) und Halterung (2) aus Metall bestehen.

## Claims

1. Device for compensating the temperature of an optical system having an optical element in a holding device (2), which is disposed displaceable in relation to a mount (3) along the cylinder axis of the mount,
a) there being disposed on the mount(3), to compensate for length changes of the mount because of temperature changes, a rocker (4), the tilting axis of which extends perpendicular to the cylinder axis of the mount (3) and is stationary in relation to the mount (3),
b) a first connecting element (8) being held on the one hand on the one lever arm (6) of the rocker and on the other hand on the mount (3) at a point remote from the fulcrum (5) along the cylinder axis, the lever ratio being adapted to the compensation path for the optical element, necessary for a predetermined temperature change, and
c) a second connecting element (10) being held on the one hand on the other lever arm (7) of the rocker and on the other hand on the holding device (2) of the optical element (1), **characterised in that**
d) both connecting elements (8) respectively consist of a material with a thermal expansion coefficient α1, or α2, which is smaller than that of the mount, and in that
e) the rocker (4) is in the shape of a ring, which is arranged concentrically to the cylinder axis in the mount (3) and is mounted tiltable in the mount.

2. Device according to claim 1, **characterised in that** the value of the thermal expansion coefficient α1 of the first connecting element (8) and/or that of the thermal expansion coefficient α2 of the second connecting element (10) is smaller than a quarter of the value of the thermal expansion coefficient of the mount (3).

3. Device according to one of claims 1 or 2, **characterised in that**, to eliminate the play of the rocker (4), a spring (16), acting in a direction parallel to the cylinder axis of the mount (3), is arranged between mount (3) and holding device (2).

4. Device according to one of claims 1 to 3, **characterised in that** the rocker (4) is arranged along the cylinder axis of the mount (3) at a spacing from the optical element (1), and in that the first connecting element (8) is held in the region of the optical element (1) on the mount (3), and the second connecting element (10) is held in the region of the optical element (1) on the holding device (2).

5. Device according to one of claims 1 to 3, **characterised in that** the rocker (4) is arranged in the region of the optical element (1) and the first connecting element (8) is held on the mount (3) along the cylinder axis of the mount (3) at a spacing from the optical element (1), and the second connecting element (10) is held on the holding device (2) along the cylinder axis of the mount (3) at a spacing from the optical element (1).

6. Device according to one of claims 1 to 5, **characterised in that** the connecting elements (8,10) are rod-shaped and extend parallel to the cylinder axis of the mount (3).

7. Device according to one of claims 1 to 6, **characterised in that** mount (3) and holding device (2) consist of metal.

## Revendications

1. Dispositif de compensation de température d'un système optique comportant un élément optique dans un support (2) qui est disposé avec liberté de coulissement par rapport à une monture (3) le long de l'axe du cylindre que forme la monture, dans le cas duquel
a) pour la compensation des modifications de longueur de la monture par suite de modifications de la température est disposée sur la monture (3) une bascule (4) dont l'axe de pivotement s'étend perpendiculairement à l'axe du cylindre que forme la monture (3) et qui est fixe en position par rapport à la monture (3),
b) un premier élément de liaison (8) est fixé d'une part au premier bras de levier (6) de la bascule et d'autre part à la monture (3) en un endroit éloigné du point de pivotement (5) le long de l'axe du cylindre que forme la monture, le rapport des bras de levier étant accordé pour l'élément optique sur la valeur de la compensation nécessaire pour une modification prescrite de la température et
c) un second élément de liaison (10) est fixé d'une part à l'autre bras de levier (7) de la bascule (4) et d'autre part au support (2) de l'élément optique (1), caractérisé par le fait que
d) les deux éléments de liaison (8) sont chacun constitués d'un matériau d'un coefficient de dilatation thermique α 1 ou α 2 qui est inférieur à celui de la monture et que
e) la bascule (4) a la forme d'un anneau qui est disposé dans la monture (3) concentriquement à l'axe du cylindre qu'elle forme et qu'il est porté dans la monture avec liberté de pivotement.

2. Dispositif selon la revendication 1 caractérisé par le fait que la valeur du coefficient de dilatation thermique α 1 du premier élément de liaison (8) et/ou celle du coefficient de dilatation thermique α 2 du second élément de liaison (10) est inférieure au quart de la valeur du coefficient de dilatation thermique de la monture (3).

3. Dispositif selon l'une des revendications 1 ou 2, caractérisé par le fait que pour remédier au jeu de la bascule (4) un ressort (16) agissant selon la direction parallèle à l'axe du cylindre que forme la monture (3) est disposé entre monture (3) et support (2).

4. Dispositif selon l'une des revendications 1 ou 3, caractérisé par le fait que la bascule (4) est disposée le long de l'axe du cylindre que forme la monture (3), à distance de l'élément optique (1) et qu'au voisinage de l'élément optique (1), le premier élément de liaison est fixé à la monture (3) et qu'au voisinage de l'élément optique (1), le second élément de liaison (10) est fixé au support (2).

5. Dispositif selon l'une des revendications 1 ou 3, caractérisé par le fait que la bascule (4) est disposée au voisinage de l'élément optique (1) et que le premier élément de liaison (8) est fixé, le long de l'axe du cylindre que forme la monture (3), à la monture (3), à distance de l'élément optique (1) et que le second élément de liaison (10) est fixé, le long de l'axe du cylindre que forme la monture (3), au support (2), à distance de l'élément optique (1).

6. Dispositif selon l'une des revendications 1 ou 5, caractérisé par le fait que les éléments de liaison (8, 10) sont en forme de barreaux et s'étendent parallèlement à l'axe du cylindre que forme la monture (3).

7. Dispositif selon l'une des revendications 1 ou 6, caractérisé par le fait que monture (3) et support (2) sont constitués de métal.
